# EUROPÄISCHE PATENTSCHRIFT

(11) **EP 1 850 089 B1**
(45) Veröffentlichungstag und Bekanntmachung des Hinweises auf die Patenterteilung: **25.07.2012**
(21) Anmeldenummer: 07008508.9
(22) Anmeldetag: 26.04.2007
(51) Int. Cl.: G01B 21/04

(54) **Vorrichtung und Verfahren zum räumlichen Vermessen von Werkstücken an einer Werkzeugmaschine**
Device and method for spatial measurement of workpieces on a machine tool
Dispositif et procédé destinés à la mesure spatiale de pièces à usiner sur une machine-outil

(30) Priorität: 26.04.2006 DE 102006020005
(43) Veröffentlichungstag der Anmeldung: 31.10.2007
(73) Patentinhaber: m & h inprocess messtechnik GmbH, 88289 Waldburg (DE)
(72) Erfinder: Madlener, Wolfgang, 88212 Ravensburg (DE); Veil, Wilfried, 88211 Ravensburg (DE)
(74) Vertreter: Roth, Klaus

(56) Entgegenhaltungen:
- EP-A1- 1 850 089
- WO-A-2004/106854
- WO-A-2005/059471
- DE-A1- 10 157 174
- DE-C1- 4 325 602
- US-A- 5 610 846

## Beschreibung

Die Erfindung betrifft ein Verfahren und eine Vorrichtung zum räumlichen Vermessen von Werkstücken an einer Werkzeugmaschine nach dem Oberbegriff des Anspruchs 1 bzw. Anspruch 15.

### Stand der Technik

Zum Vermessen von Werkstücken an Werkzeugmaschinen werden regelmäßig Messtaster eingesetzt. Diese erzeugen bei der Berührung mit einem Werkstück ein Signal, aus dem in Kombination mit XYZ-Koordinaten einer Einrichtung zum Verfahren des Messtasters ein Messwert bestimmt wird.

Aufgrund verschiedener Einflüsse auf die einzelnen Elemente der Messeinrichtung können Messfehler durch Abweichung von einem theoretischen zu einem tatsächlichen Messwert auftreten. Zur Behebung solcher Messfehler ist es bekannt, die Messeinrichtung mittels eines Kalibrierkörpers zu kalibrieren. Ein solcher Kalibriervorgang ist zum Beispiel nach jedem Messtasterwechsel erforderlich, kann bei entsprechend hohen Genauigkeitsanforderungen an das Messergebnis aber durchaus auch zu Beginn der Vermessung jedes neu zu vermessenden Werkstücks erfolgen. Damit können auch Störeinflüsse berücksichtigt werden, die seit der letzten Kalibrierung im Laufe der Betriebszeit die Messgenauigkeit der Messeinrichtung verändert haben. Aus der DE 101 57 174 A1 ist ein Verfahren bekannt bei welchem für jeden Messpunkt eine Kalibrierung vorgenommen wird. Dies führt auf der einen Seite zu einer Verbesserung der Messgenauigkeit, andererseits geht damit aber der Nachteil des zusätzlichen Zeitaufwandes einher.

Aus der DE 43 25 602 C1 ist zu entnehmen, dass beim Antasten von Messpunkten eines Werkstückes die ermittelten Koordinaten jedes Messpunktes mit einem Korrekturwert (Offset) versehen werden, wobei die Offset-Werte durch Antastung einer Kalibrierkugel bekannten Durchmessers in den Koordinatenrichtungen gewonnen werden. Weicht die Antastrichtung von diesen Koordinatenrichtungen ab, werden die Offsets mit Hilfe der bekannten Offsets in den Koordinatenrichtungen interpoliert.

### Aufgabe und Vorteile der Erfindung

Der Erfindung liegt daher die Aufgabe zugrunde, das räumliche Vermessen von Werkstücken an einer Werkzeugmaschine bei akzeptabler Genauigkeit zu rationalisieren.

Diese Aufgabe wird durch die Ansprüche 1 und 14 gelöst. In den Unteransprüchen sind vorteilhafte und zweckmäßige Weiterbildungen der Erfindungen angegeben.

Zunächst geht die Erfindung von einem Verfahren zum räumlichen Vermessen von Werkstücken mit einem Messtaster an einer Werkzeugmaschine aus, bei welcher in Bezug auf ein Werkstück eine Verfahrbarkeit des Messtasters in einem XYZ-Koordinatensystem realisiert ist, wobei an einem Kalibrierkörper für vorgegebene, verteilt angeordnete Kalibrierpunkte jeweils ein Korrekturwert ermittelt wird.

Das Verfahren zeichnet sich dadurch aus, dass für eine Messstelle ein Korrekturwert eines weiteren Kalibrierpunktes am Kalibrierkörper ermittelt wird, falls für die Messstelle kein Korrekturwert zur Verfügung steht und ein unter Berücksichtigung wenigstens eines bekannten Korrekturwertes möglicher, maximaler Messfehler größer sein kann, als ein maximal zulässiger Messfehler.

Dieser Vorgehensweise liegt die Erkenntnis zugrunde, dass bei der Durchführung eines solchen Messverfahrens eine deutliche Zeitersparnis bei ausreichender Messgenauigkeit erreicht werden kann, im Vergleich für jene bekannten Messverfahren, bei denen für jeden einzelnen Messpunkt ein Korrekturwert durch Kalibrierung am Kalibrierkörper ermittelt wird.

Als Basis für ein solches Messverfahren kann beispielsweise eine bestimmte Anzahl von Kalibrierpunkten als ein sogenanntes Grundkalibriergitter über einen oder mehrere bestimmte Bereiche der Kalibrierkugel festgelegt werden, für die dann der jeweilige Korrekturwert ermittelt wird. Die Festlegung der auf der Kalibrierkugel zu kalibrierenden Bereiche kann vorzugsweise von einer bestimmten Messaufgabe abhängig sein, d.h. es ist insbesondere möglich, bestimmte Messpunkte an einem Messobjekt mit besonders hohen Genauigkeitsanforderungen bei der Festlegung des Grundkalibriergitters und insbesondere einzelner oder mehrerer Kalibrierpunkte zu berücksichtigen.

Korrekturwerte für Messpunkte, die zwischen solchen Kalibrierpunkten liegen, können z.B. durch Heranziehen und gegebenenfalls Modifizieren eines bekannten Korrekturwerts im Folgenden auch als Ableiten bezeichnet werden, falls ein unter Berücksichtigung der bekannten Korrekturwerte möglicher maximaler Messfehler gleich oder kleiner ist als ein maximal zulässiger Messfehler. D.h. wenn der Messpunkt z.B. relativ nahe an einem Kalibrierpunkt liegt, also deren beiden Tangentialebenen ähnlich ausgerichtet sind, kann es ausreichen, wenn lediglich der Korrekturwert eines einzigen Kalibrierpunktes für die Fehlerkorrektur des betreffenden Messpunktes herangezogen wird. Durch die Berücksichtigung zweier oder mehrerer Korrekturwerte jeweiliger Kalibrierpunkte an dem Kalibrierkörper ist auch eine gemittelte und/oder eine gewichtete Auswertung, also eine Art Interpolation (z.B. in Abhängigkeit der jeweiligen Distanzen zwischen dem Messpunkt und den jeweiligen Kalibrierpunkten) bei der Bestimmung des Korrekturwertes für die betreffende Messstelle möglich.

Ein maximal zulässiger Fehler kann für ein Kalibriergrundgitter in einer Weise z.B. empirisch ermittelt werden, dass unter Berücksichtigung der vorhandenen Korrekturwerte an allen anderen Stellen nie ein Fehler auftreten kann, der größer ist als der festgelegte maximale Fehler.

Wenn diese Messgenauigkeit nicht mehr ausreicht, dann wird ein neuer Kalibrierpunkt zur Bestimmung eines Korrekturwertes für die jeweilige Messstelle an dem Kalibrierkörper bestimmt.

Somit wird einerseits eine deutliche Verbesserung im Zeitaufwand hinsichtlich der Ermittlung eines Korrekturwertes für eine bestimmte Messstelle durch Ableiten von einem für einen bestimmten Kalibrierpunkt bekannten Messfehler unter Verzicht auf eine weitere Kalibrierung erreicht. Andererseits wird durch eine Gegenüberstellung des für den jeweiligen Messpunkt vorgegebenen Toleranzwertes mit einem maximal durch ein derartiges Ableitungsverfahren möglichen Messfehler sichergestellt, dass der vorgegebene Toleranzwert für die jeweilige Messung nicht überschritten wird. Eine erneute Kalibrierung findet nur dann statt, wenn ein vorgegebener Toleranzwert nicht eingehalten werden kann.

Die Position des weiteren Kalibrierpunktes auf dem Kalibrierkörper, der aufgrund der Überschreitung eines Toleranzwertes für einen bestimmten Messpunkt erforderlich wird, kann in einer ersten Ausführungsform des Verfahrens so festgelegt werden, dass seine Tangentialenebene zur Tangentialebene der Messstelle wenigstens annähernd parallel ausgerichtet ist. Dass heißt, dieser Kalibrierpunkt wird an der Stelle auf den Kalibrierkörper gesetzt, die im Idealfall der Ausrichtung der Messstelle entspricht.

In einer demgegenüber abgewandelten Ausführungsform kann es aber auch vorgesehen sein, dass die Position des weiteren Kalibrierpunktes entsprechend einer Verfeinerungsvorschrift für ein Raster bestimmt wird, welches durch die am Kalibrierkörper verteilt angeordneten Kalibrierpunkte vorgegeben wird. Die Verfeinerungsvorschrift kann sich dabei grundsätzlich auf das Raster beziehen, welches durch die zu Beginn festzulegenden Kalibrierpunkte auf dem Kalibrierkörper abbildet wird. Dass heißt ein neu festzusetzender Kalibrierpunkt kann beispielsweise anhand einer entsprechend mathematischen Funktion so zwischen bereits festgelegten Kalibrierpunkten positioniert werden, dass er möglichst gut in den weiteren Ablauf des Messverfahrens integriert werden kann. Denkbar sind hier beispielsweise die Schnittpunkte von Verbindungslinien oder die Flächenmittelpunkte von benachbarten Kalibrierpunkten.

Eine zusätzliche Verfeinerung dieses Rasters auf dem Kalibrierkörper kann durch Berücksichtigung von bereits neu hinzugefügten Kalibrierpunkten mit einer entsprechend erweiterten Verfeinerungsvorschrift erreicht werden.

In einer nächsten Ausführungsform des Messverfahrens kann der Korrekturwert des weiteren ermittelten Kalibrierpunktes zur schrittweisen Verfeinerung des Herleitungsverfahrenes für weitere zu bestimmende Korrekturwerte in die Menge der anfangs festgelegten Kalibrierpunkte aufgenommen werden. Bei einem solchen Ab- bzw. Herleitungsverfahren soll im Sinne der Erfindung neben dem Bezug auf einen einzelnen, bereits bekannten Korrekturwert, z.B. für einen benachbarten Kalibrierpunkt, auch die Ermittlung des neuen Korrekturwertes anhand der Durchführung einer Interpolation im mathematischen Sinne, z.B. unter Bezugnahme auf die jeweiligen Korrekturwerte von wenigstens zwei bereits bekannten Kalibrierpunkten, verstanden werden. Dadurch wird eine succzesive Rasterverfeinerung auf dem Kalibrierkörper erreicht, die jedoch in zeitsparender Weise nur bei Bedarf durchgeführt wird.

In einer weiteren möglichen Ausführungsform kann die Position der Kalibrierpunkte, die zu Beginn des Verfahrens im Rahmen einer Grundkalibrierung über den Kalibrierkörper verteilt angeordnet werden so vorgegeben werden, dass das dadurch entstehende Raster den Kalibrierkörper annähernd gleichmäßig überdeckt. So kann beispielsweise ein kugelförmiger Kalibrierkörper mit Längen- und Breitengraden überzogen werden, an deren Schnittpunkten Kalibrierpunkte festgelegt werden.

Damit kann beispielsweise eine gewisse Grundkalibrierung für die Vermessung von Messpunkten mit zuvor noch nicht bekannten Tangentialebenenausrichtungen festgelegt werden. Eine Verfeinerung diese Grundkalibrierung ergibt sich dann anhand der durch das jeweilige Werkstück vorgegebenen Messpunkte sowie der Ausrichtung der jeweils diesen zugeordneten Tangentialebenen.

In einer davon abgewandelten Ausführungsform kann die Position der Kalibrierpunkte bei der Grundkalibrierung aber auch an der Topografie eines Werkstückes orientiert werden, so dass das dadurch entstehende Raster den Kalibrierkörper nur an den Stellen überdeckt, die zumindest ähnlich ausgerichtet Tangentialebenen aufweisen wie die Tangentialebenen von Messpunkten eines zu vermessenden Werkstückes. Dadurch kann entweder mit der gleichen Anzahl an Kalibrierpunkten eine höhere Dichte in Bezug auf die jeweiligen Messpunkte erreicht werden, und somit eine feinere Auflösung für das Ableitungsverfahren zur Bestimmung jener Korrekturwerte, für die ein direkt ermittelter Korrekturwert vorliegt, oder anderseits, ist es damit möglich, durch die gezielte Positionierung der bei der Grundkalibrierung festzulegenden Kalibrierpunkte deren Anzahl und den damit verbundenen Zeitaufwand in weiter vorteilhafter Weise bei gleichbleibender Messgenauigkeit zu reduzieren.

In einer weiter optimierten Ausführungsform des Messverfahrens können bei der Positionsbestimmung der bei der Grundkalibrierung festzulegenden Kalibrierpunkte auch die Genauigkeitsanforderungen berücksichtig werden, die an einzelne Messpunkte zur Vermessung des werkstückes gestellt sind. Insbesondere ist es hierbei möglich, beginnend mit den Messpunkten an die die höchsten Messgenauigkeitsanforderungen gestellt sind die Position der zu Beginn des Messverfahrens am Kalibrierkörper festzulegenden Kalibrierpunkte zu bestimmen. Dies ergibt eine weitere Optimierung des Messverfahrens, und zwar sowohl hinsichtlich der für die Grundkalibrierung erforderlichen Anzahl an Kalibrierpunkten und des damit verbundenen Zeitaufwandes als auch gleichzeitig hinsichtlich einer Verfeinerung des Interpolationsverfahrens für die nicht direkt dadurch abgedeckten Messpunkte mit größeren Toleranzwerten.

Die Ermittlung eines einem jeweiligen Kalibrierpunkt zugeordneten Korrekturwertes kann beispielsweise durch das Anfahren des Messtasters an den jeweiligen Kalibrierpunkt vorgesehen sein. Hierbei wird es als insbesondere vorteilhaft angesehen, wenn der Korrekturwert eines Kalibrierpunktes mit einem vorgegebenen Anfahrvektor und/oder einer vorgegebenen Anfahrgeschwindigkeit ermittelt wird. Dadurch kann für alle Korrekturwerte eine möglichst gleich hohe Genauigkeit des jeweiligen Korrekturwertes erreicht werden. Diese ist besonders hoch, wenn der Anfahrvektor als Normalenvektor auf die Tangentialebene des Kalibrierpunktes ausgerichtet ist.

Zur Erzielung einer Zeitersparnis wird im Weiteren vorgeschlagen, dass für die Messstelle ein Korrekturwert eines weiteren Kalibrierpunktes (durch ableiten von einem bekannten Korrekturwert ermittelt wird, falls ein unter Berücksichtigung der bekannten Korrekturwerte möglicher, maximaler Messfehler gleich oder kleiner ist, als ein maximal zulässiger Messfehler. Das heißt, dass für eine Messstelle an dem werkstück, für die kein Kalibrierpunkt mit einer zur Tangentialebene der Messstelle wenigstens annähernd gleich ausgerichteten Tangentialebene zur Verfügung steht, ein Korrekturwert anhand eines vorliegenden Korrekturwertes wenigstens eines Kalibrierpunktes, der eine zur Tangentialebene des Messpunktes ähnlich ausgerichtete Tangentialebene aufweist, durch ableiten davon bestimmt wird. Es ist aber auch möglich, dass für die Ableitung in der Art einer Interpolation eines neuen Korrekturwertes mehrere bereits bekannte, durch Kalibrierung ermittelte Kalibrierwerte herangezogen werden, deren Tangentialebenen wenigstens annähernd gleich ausgerichtet sind wie die Tangentialebene des zu bestimmenden Messpunktes.

Für das Herleitungsverfahren zur Ermittlung des Korrekturwertes für einen Messpunkt für den kein Kalibrierpunkt vorliegt ist es besonders bevorzugt, wenn der Korrekturwert jenes Kalibrierpunktes herangezogen wird, dessen Tangentialebene in Ihrer Ausrichtung der Tangentialebene des betreffenden Messpunktes am ähnlichsten ist.

In einer weiteren Ausführungsform kann es auch vorgesehen sein, dass zur Ermittlung des Korrekturwertes für einen Messpunkt für den kein Kalibrierpunkt vorliegt mindestens die beiden Korrekturwerte von jenen zwei Kalibrierpunkten herangezogen werden, deren Tangentialebenen in ihrer jeweiligen Ausrichtung der Tangentialebene des betreffenden Messpunktes am ähnlichsten sind. Weiterhin kann dazu beispielsweise auch eine Gewichtung der einzelnen Korrekturwerte erfolgen, die für die Ableitung zur Bestimmung des neuen Korrekturwertes berücksichtigt werden.

In einer besonders bevorzugten Ausführungsform sieht das Verfahren vor, dass eine Messstelle am Werkstück mit einer Tangentialebene die gleich ausgerichtet ist wie die Tangentialebene des Kalibrierpunktes vom Messtaster mit dem gleichen Anfahrvektor und/oder der gleichen Anfahrgeschwindigkeit angefahren wird wie der entsprechende Kalibrierpunkt. Damit kann für jeden Messpunkt eine maximal mögliche Messgenauigkeit realisiert werden.

Für eine Messstelle, für die am Werkstück kein Kalibrierpunkt mit gleich ausgerichteter Tangentialebene definiert ist, kann ein entsprechender Anfahrvektor und/oder eine entsprechende Anfahrgeschwindigkeit des Messtasters durch Interpolation ermittelt werden.

Im weiteren ist zur Durchführung des Verfahrens eine Vorrichtung zum räumlichen vermessen von Werkstücken an einer Werkzeugmaschine vorgesehen, mit einem Messtaster und einer Rechnereinheit, wobei in Bezug auf ein Werkstück eine Verfahrbarkeit des Messtasters in einem XYZ-Koordinatensystem realisiert ist, und die Rechnereinheit dazu ausgelegt ist, an einem Kalibrierkörper für vorgegebene, verteilt angeordnete Kalibrierpunkte jeweils einen Korrekturwert zu ermitteln.

Diese zeichnet sich dadurch aus, dass die Rechnereinheit weiterhin dazu ausgelegt ist, für eine Messstelle einen Korrekturwert eines weiteren Kalibrierpunktes am Kalibrierkörper zu ermitteln, falls für die Messstelle kein Korrekturwert zur Verfügung steht und ein unter Berücksichtigung wenigstens eines bekannten Korrekturwertes möglicher, maximaler Messfehler größer sein kann, als ein maximal zulässiger Messfehler.

### Zeichnungen

Ein Ausführungsbeispiel der Erfindung ist in den Zeichnungen dargestellt und unter Angabe weiterer Vorteile und Einzelheiten näher erläutert.

Es zeigen:
- Figur 1: eine stark schematisierte dreidimensionale Ansicht eine Messaufbaus zum räumlichen Vermessen eines Werkstücks,
- Figur 2: einen Kalibrierkörper mit einem darübergelegten Raster von Kalibrierpunkten und
- Figur 3: eine Rechnereinheit zur Durchführung eines entsprechenden Verfahrens mit einem schematisch dargestellten Auszug eines entsprechenden Rechenprogramms.

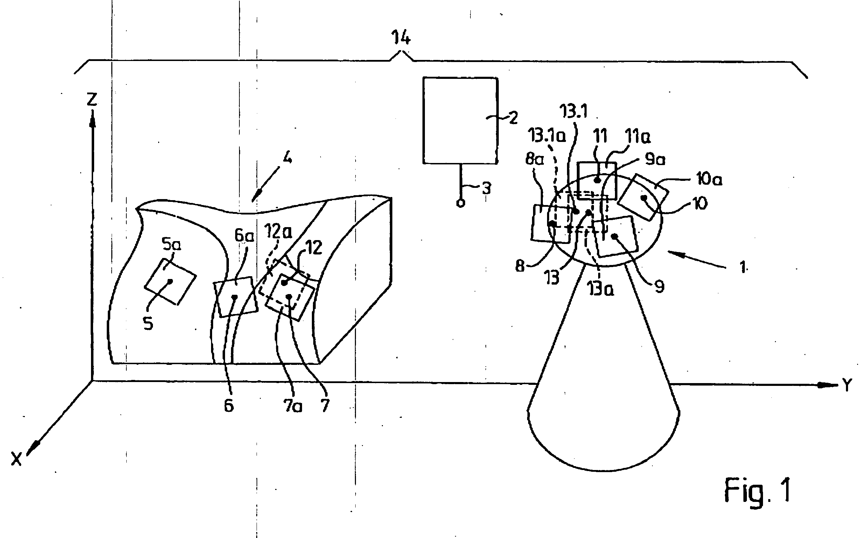

In der Figur 1 ist eine Kalibrierkugel 1, ein Messtaster 2 mit einem Taststift 3 und ein Werkstück 4 in Bezug auf ein XYZ-Koordinatensystem einer Werkzeugmaschine zur Vermessung von Werkstücken dargestellt. Während oder nach der Bearbeitung des Werkstücks 4 durch ein nicht dargestelltes Werkzeug in der nicht dargestellten Werkzeugmaschine ist es erforderlich, das Werkstück 4 auf die geforderte Maßhaltigkeit hin zu überprüfen. Hierzu werden üblicherweise mehrere Messpunkte an dem werkstück 4 mit dem Messtaster so angefahren, dass der Taststift die betreffende Messstelle berührt.

Zur Reduzierung der physikalischen Ungenauigkeiten bei der Vermessung von Werkstücken werden an dem Kalibrierkörper 1 Kalibrierpunkte 8, 9, 10, 11 vom Messtaster 2 angefahren und jeweils zugehörige Korrekturwerte K ermittelt. Für jene Messstellen 5, 6, 7 mit Tangentialebenen 5a, 6a, 7a, für die ein korrespondierender Kalibrierpunkt mit einer parallel ausgerichteten Tangentialebene 8a, 9a, 10a oder 11a existiert, wird der jeweils dafür ermittelte Korrekturwert K bei der Ermittlung des betreffenden Messwertes berücksichtigt.

Für eine Messstelle 12 an einem Werkstück 4 für die kein entsprechender Kalibrierpunkt mit einer zu ihrer Tangentialebene 12a wenigstens annähernd gleich ausgerichteten Tangentialebene zur Verfügung steht wird in zeitsparender Weise ein Korrekturwert Ki anhand eines vorliegenden Korrekturwertes K wenigstens eines Kalibrierpunktes 8, 9, 10 oder 11 durch Ableitung ermittelt, der vorzugsweise eine zur Tangentialebene 12a des Messpunktes 12 ähnlich ausgerichtete Tangentialebene aufweist. Gegebenenfalls können auch ein oder mehrere weitere Korrekturwerte K von Kalibrierpunkten mit ähnlich ausgerichteten Tangentialebenen zur Ermittlung des abzuleitenden Korrekturwertes für die Messstelle 12 herangezogen werden.

Hierzu wird für den abgeleiteten Korrekturwert Ki ein maximal möglicher Messfehler X für die Messstelle bestimmt, wobei der maximal mögliche Messfehler X mit einem maximal zulässigen Messfehler T verglichen wird, und wobei für den Fall, dass der mögliche Messfehler größer ist als der zulässige Messfehler T für die Messstelle 12 ein Korrekturwert Kw eines weiteren Kalibrierpunktes 13 an dem Kalibrierkörper 1 ermittelt wird.

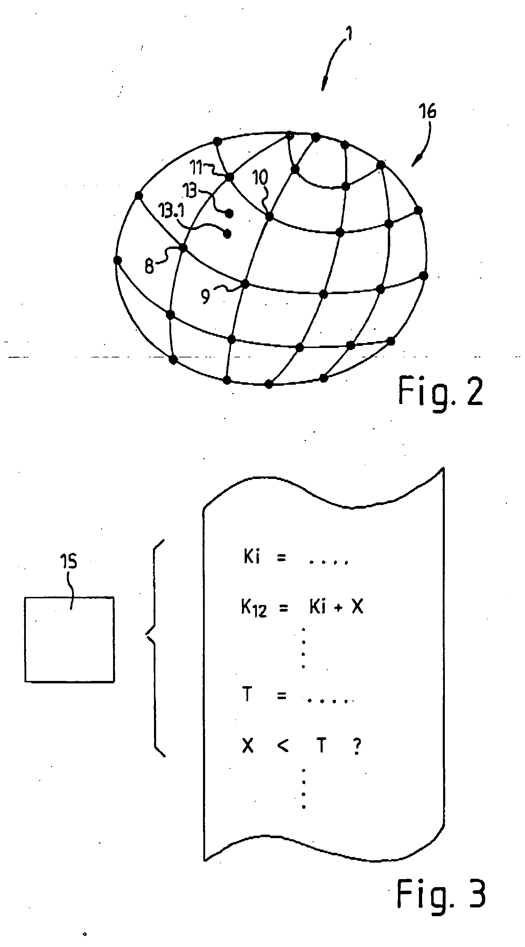

In einer ersten möglichen Vorgehensweise wird dabei die Position des weiteren Kalibrierpunktes 13 auf dem Kalibrierkörper 1 so bestimmt, dass seine Tangentialebene 13a zur Tangentialebene 12a der Messstelle 12 wenigstens annähernd parallel ausgerichtet ist (Figur 1 und Figur 2).

Die Position des weiteren Kalibrierpunktes 13 kann aber abweichend davon auch entsprechend einer Verfeinerungsvorschrift bestimmt werden, welche für ein Raster 16 vorgesehen ist, welches durch die am Kalibrierkörper 1 verteilt angeordneten Kalibrierpunkte vorgegeben wird. In den Figuren 1 und 2 ist diese Position des weiteren Kalibrierpunktes durch die Position 13.1 gekennzeichnet, dem eine Tangentialebene 13.1a zugeordnet ist.

Zur Verfeinerung des Ableitungsverfahrens wird der Korrekturwert Kw des weiteren ermittelten Kalibrierpunktes 13 bzw. 13.1 der Menge der Korrekturwerte K der bereits vorhandenen Kalibrierpunkte 8, 9, 10, 11 hinzugefügt und für weitere Korrekturwertbestimmungen für nachfolgende Messungen und Werkstücke berücksichtigt.

Die Positionsfestlegung für die einzelnen Kalibrierpunkte 8, 9, 10, 11 zu Beginn des Verfahrens im Rahmen einer Grundkalibrierung kann, je nach beabsichtigtem Messverfahren, entweder überwiegend gleichmäßig über den Kalibrierkörper verteilt angeordnet werden (Figur 2) oder auch in Abhängigkeit der Topografie des Werkstückes nur bestimmte Stellen des Kalibrierkörpers überdecken. Ein auf ein bestimmtes Werkstück hin ausgerichtete Messverfahren kann durch dadurch optimiert werden, dass zur Festlegung der einzelnen Kalibrierpunktpositionen weiterhin die Genauigkeitsanforderungen an die einzelnen Messpunkte berücksichtigt werden. So können zum Beispiel jene korrespondierenden Messpunkte bei der Bestimmung der Kalibrierpunktpositionen zu Beginn der Kalibrierung herangezogen werden, an welche die größten Genauigkeitsanforderungen gestellt sind. Dieses Verfahren selektiert automatisch zwischen Messpunkten mit hohen und vergleichsweise geringeren Genauigkeitsanforderungen, wobei für die Zahl der Messpunkte, die der Grundanzahl an Kalibrierpunkten entspricht bereits von vorneherein sichergestellt ist, dass dafür kein abgeleiteter Korrekturwert ermittelt werden muss.

Sinnvoller Weise wird für die Ermittlung des Korrekturwertes Ki für einen Messpunkt 12 für den kein Kalibrierpunkt vorliegt, der Korrekturwert K jenes Kalibrierpunktes 8, 9, 10 oder 11 herangezogen, dessen Tangentialebene in ihrer Ausrichtung der Tangentialebene des betreffenden Messpunktes am ähnlichsten ist. Gegebenenfalls können dazu auch mehrere Korrekturwerte von Kalibrierpunkten herangezogen werden, deren Tangentialebenen der Tangentialebene des gesuchten Messwertes am nächsten sind.

Zur Ermittlung des Korrekturwertes kann der Messtaster 2 einen entsprechenden Kalibrierpunkt mit einem vorgegebenen Anfahrvektor und/oder auch einer vorgegebenen Anfahrgeschwindigkeit anfahren. Mit dem gleichen Anfahrvektor und der gleichen Anfahrgeschwindigkeit kann dann auch ein betreffender Messpunkt am Werkstück 4 angefahren werden. Für abgeleitete Kalibrierpunkte kann ein entsprechender Anfahrvektor und eine entsprechend Anfahrgeschwindigkeit durch Interpolation ermittelt werden, auf deren Basis dann der betreffende Messpunkt am Werkstück 4 angefahren werden kann.

Zur Durchführung des Verfahrens ist eine entsprechend geeignete Vorrichtung 14 vorgesehen, die weiterhin eine Rechnereinheit 15 aufweist, die dazu ausgelegt ist die oben beschriebenen Verfahrensschritte durchzuführen.

Entsprechend der Figur 3 ist eine diesbezügliche Rechnereinheit 15 dargestellt die Teil der Vorrichtung 14 ist. In dieser Recheneinheit kann ein Rechenprogramm ablaufen, welches für den abgeleiteten Korrekturwert Ki einen maximal möglichen Messfehler X für die Messstelle bestimmt, den maximal möglichen Messfehler X mit einem maximal zulässigen Messfehler T vergleicht und für den Fall, dass der maximal mögliche Messfehler X größer ist als der zulässige Messfehler T für die Messstelle einen Korrekturwert Kw eines weiteren Kalibrierpunktes 13 am Kalibrierkörper 1 ermittelt, wie dies durch den schematischen, auszugsweisen Programmabschnitt neben der Recheneinheit 15 dargestellt ist.

### Bezugszeichenliste:

- 1: Kalibrierkörper
- 2: Messtaster
- 3: Taststift
- 4: Werkstück
- 5: Messstelle
- 6: Messstelle
- 7: Messstelle
- 8: Kalibrierpunkt
- 9: Kalibrierpunkt
- 10: Kalibrierpunkt
- 11: Kalibrierpunkt
- 12: Messstelle
- 13: Kalibrierpunkt
- 13.1: Kalibrierpunkt
- 14: Vorrichtung
- 15: Recheneinheit
- 16: Raster

- 5a - 13a: Tangentialebene

## Patentansprüche

1. Verfahren zum räumlichen Vermessen von Werkstücken (4) zeit einem Messtaster (2) an einer Werkzeugmaschine, bei welcher in Bezug auf ein Werkstück (4) eine Verfahrbarkeit des Messtasters in einem XYZ-Koordinatensystem realisiert ist, wobei an einem Kalibrierkörper (1) für vorgegebene, verteilt angeordnete Kalibrierpunkte (8, 9, 10, 11) jeweils ein Korrekturwert (K) ermittelt wird, **dadurch gekennzeichnet, dass** für eine Messstelle (12) ein Korrekturwert (Kw) eines weiteren Kalibrierpunktes (13) am Kalibrierkörper-(1) ermittelt wird, falls für die Messstelle kein Korrekturwert zur Verfügung steht und ein unter Berücksichtigung wenigstens eines bekannten Korrekturwertes (K) möglicher, maximaler Messfehler (X) größer sein kann, als ein maximal zulässiger Messfehler (T).

2. Verfahren nach Anspruch 1, **dadurch gekennzeichnet, dass** die Position des weiteren Kalibrierpunktes (13) auf dem Kalibrierkörper (1) so bestimmt wird, dass seine Tangentialebene (13a) zur Tangentialebene (12a ) der Messstelle (12) wenigstens annähernd parallel ausgerichtet ist.

3. Verfahren nach Anspruch 1, **dadurch gekennzeichnet, dass** die Position des weiteren Kalibrierpunktes (13 ) entsprechend einer Verfeinerungsvorschrift für ein Raster bestimmt wird, welches durch die am Kalibrierkörper (1) verteilt angeordneten Kalibrierpunkte (8, 9, 10, 11) vorgegeben wird.

4. Verfahren nach einem der vorangehenden Ansprüche, **dadurch gekennzeichnet, dass** der Korrekturwert (Kw) des weiteren ermittelten Kalibrierpunktes (13) der Menge der Korrekturwerte (K) der vorhandenen Kalibrierpunkte (8, 9, 10, 11) hinzugefügt und für eine Korrekturwertbestimmung für nachfolgende Messungen am Werkstück berücksichtigt wird.

5. Verfahren nach einem der vorangehenden Ansprüche, **dadurch gekennzeichnet, dass** die Positionen der Kalibrierpunkte (8, 9, 10, 11) zu Beginn des Verfahrens im Rahmen einer Grundkalibrierung so vorgegeben werden, dass das **dadurch** entstehende Raster den Kalibrierkörper (1) annähernd gleichmäßig überdeckt.

6. Verfahren nach einem der vorangehenden Ansprüche, **dadurch gekennzeichnet, dass** sich die Position der Kalibrierpunkte (8, 9,- 10, 11) bei einer Grundkalibrierung an der Topographie eines Werkstückes orientiert, so dass das **dadurch** entstehende Raster den Kalibrierkörper (1) nur an den Stellen überdeckt, die Tangentialebenen (8a-11a) aufweisen, deren Ausrichtung zumindest ähnlich ist wie die Ausrichtung der Tangentialebenen (5a-7a) von Messpunkten eines zu vermessenden Werkstückes.

7. Verfahren nach einem der vorangehenden Ansprüche, **dadurch gekennzeichnet, dass** bei der Positionsbestimmung der bei der Grundkalibrierung festzulegenden Kalibrierpunkte (8, 9, 10, 11) die Genauigkeitsanforderungen berücksichtigt werden, die an einzelne Messpunkte (8, 9, 10, 11) zur Vermessung des Werkstückes (4) gestellt sind.

8. Verfahren nach einem der vorangehenden Ansprüche, **dadurch gekennzeichnet, dass** ein einem jeweiligen Kalibrierpunkt (8, 9, 10, 11) zugeordneter Korrekturwert (K) durch Anfahren des Messtaster (2) an den jeweiligen Kalibrierpunkt (8, 9, 10, 11) ermittelt wird.

9. Verfahren nach einem der vorangehenden Ansprüche, **dadurch gekennzeichnet, dass** der Korrekturwert (K) eines Kalibrierpunktes (8, 9, 10, 11) mit einem vorgegebenen Anfahrvektor und/oder einer vorgegebenen Anfahrgeschwindigkeit ermittelt wird.

10. Verfahren nach einem der vorangehenden Ansprüche, **dadurch gekennzeichnet, dass** für die Messstelle (12) ein Korrekturwert (Ki) eines weiteren Kalibrierpunktes (13) durch ableiten von einem bekannten Korrekturwert ermittelt wird, falls ein unter Berücksichtigung der bekannten Korrekturwerte (K) möglicher, maximaler Messfehler (X) gleich oder kleiner ist, als ein maximal zulässiger Messfehler (T).

11. Verfahren nach einem der vorangehenden Ansprüche, **dadurch gekennzeichnet, dass** zur Ermittlung des Korrekturwertes (Ki) für einen Messpunkt (12) für den kein Kalibrierpunkt vorliegt, der Korrekturwert (K) jenes Kalibrierpunktes (8, 9, 10, 11) herangezogen wird, dessen Tangentialebene in ihrer Ausrichtung der Tangentialebene des betreffenden Messpunktes am Ähnlichsten ist.

12. Verfahren nach einem der vorangehenden Ansprüche, **dadurch gekennzeichnet, dass** zur Ermittlung des Korrekturwertes (Ki) für einen Messpunkt (12) für den kein Kalibrierpunkt vorliegt mindestens die beiden Korrekturwerte von jenen zwei Kalibrierpunkten (8, 9, 10, 11) herangezogen werden, deren Tangentialebenen in ihrer jeweiligen Ausrichtung der Tangentialebene (12a) des betreffenden Messpunktes am ähnlichsten sind.

13. Verfahren nach einem der vorangehenden Ansprüche, **dadurch gekennzeichnet, dass** eine Messstelle (12) am Werkstück (4) mit einer Tangentialebene (12a) die zumindest annähernd gleich ausgerichtet ist wie die Tangentialebene des Kalibrierpunktes (8, 9, 10 oder 11) vom Messtaster (2) mit dem gleichen Anfahrvektor und der gleichen Anfahrgeschwindigkeit angefahren wird, wie der entsprechende Kalibrierpunkt.

14. Verfahren nach einem der vorangehenden Ansprüche, **dadurch gekennzeichnet**e dass für eine Messstelle (12) am Werkstück (4) für die kein Kalibrierpunkt mit zumindest annähernd gleich ausgerichteter Tangentialebene definiert ist, der Anfahrvektor und/oder die Anfahrgeschwindigkeit des Messtasters (2) durch Interpolation ermittelt wird.

15. Vorrichtung zum räumlichen Vermessen von Werkstücken (4) an einer Werkzeugmaschine, mit einem Messtaster (2) und einer Rechnereinheit (15), wobei in Bezug auf ein Werkstück eine Verfahrbarkeit des Messtasters (2) in einem XYZ-Koordinatensystem realisiert ist, und die Rechnereinheit (15) dazu ausgelegt ist, an einem Kalibrierkörper (1) für vorgegebene, verteilt angeordnete Kalibrierpunkte (8, 9, 10, 11) jeweils einen Korrekturwert (K) zu ermitteln, **dadurch gekennzeichnet, dass** die Rechnereinheit (15) weiterhin dazu ausgelegt ist, für eine Messstelle (12) einen Korrekturwert (Kw) eines weiteren Kalibrierpunktes (13) am Kalibrierkörper (1) zu ermitteln, falls für die Messstelle kein Korrekturwert zur Verfügung steht und ein unter Berücksichtigung wenigstens eines bekannten Korrekturwertes (K) möglicher, maximaler Messfehler (X) größer sein kann, als ein maximal zulässiger Messfehler (T).

16. Vorrichtung nach Anspruch 15, die ausgelegt ist das Verfahren nach einem der Ansprüche 2 bis 14 durchzuführen.

## Claims

1. Method for the spatial measurement of workpieces (4) by means of a measuring probe (2) on a machine tool, in which in relation to a workpiece (4) the measuring probe can be moved in an XYZ coordinate system, wherein on a calibrating body (1) a correction value (K) is determined respectively for predefined, distributed calibrating points (8, 9, 10, 11), **characterised in that** for a measuring point (12) a correction value (Kw) of an additional calibrating point (13) is determined on the calibrating body (1), if no correction value is available for the measuring point and, taking into consideration at least one known correction value (K), a possible, maximum measurement error (X) can be greater than a maximum permissible measurement error (T).

2. Method according to claim 1, **characterised in that** the position of the additional calibrating point (13) on the calibrating body (1) is determined, so that its tangential plane (13a) is aligned to be at least almost parallel to the tangential plane (12a) of the measuring point (12).

3. Method according to claim 1, **characterised in that** the position of the additional calibrating point (13) is determined according to a refinement rule for a grid, which is predefined by the calibrating points (8, 9, 10, 11) distributed on the calibrating body (1).

4. Method according to any one of the preceding claims, **characterised in that** the correction value (Kw) of the additional determined calibrating point (13) is added to the amount of the correction values (K) of available calibrating points (8, 9, 10, 11) and is taken into consideration for determining a correction value for following measurements on the workpiece.

5. Method according to any one of the preceding claims, **characterised in that** the positions of the calibrating points (8, 9, 10, 11) at the beginning of the method are predefined as part of a base calibration so that the grid formed thereby covers the calibrating body (1) approximately evenly.

6. Method according to any one of the preceding claims, **characterised in that** the position of the calibrating points (8, 9, 10, 11) is oriented during the base calibration to the topography of a workpiece, so that the grid formed thereby covers the calibrating body (1) only in places with tangential planes (8a, 11 a), the alignment of which is at least similar to the alignment of the tangential planes (5a-7a) of measuring points of a workpiece to be measured.

7. Method according to any one of the preceding claims, **characterised in that** for determining the position of the calibrating points (8, 9, 10, 11) to be determined during the base calibration the requirements for precision are taken into consideration which relate to individual measuring points (8, 9, 10, 11) for measuring the workpiece (4).

8. Method according to any one of the preceding claims, **characterised in that** a correction value (K) assigned to a respective calibrating point (8, 9, 10, 11) is determined by moving the measuring probe (2) up to the respective calibrating point (8, 9, 10,11).

9. Method according to any one of the preceding claims, **characterised in that** the correction value (K) of a calibrating point (8, 9, 10, 11) is determined by a predefined start vector and/or a predefined start speed.

10. Method according to any one of the preceding claims, **characterised in that** for the measuring point (12) a correction value (Ki) of an additional calibrating point (13) is determined by deriving from a known correction value, if a possible, maximum measurement error (X) taking into account the known correction values (K) is equal to or smaller than a maximum permissible measurement error (T).

11. Method according to any one of the preceding claims, **characterised in that** to determine the correction value (Ki) for a measuring point (12) for which there is no calibrating point, the correction value (K) of the calibrating point (8, 9, 10, 11) is used, the tangential plane of which is most similar in its alignment of the tangential plane of the relevant measuring point.

12. Method according to any one of the preceding claims, **characterised in that** to determine the correction value (Ki) for a measuring point (12) for which there is no calibrating point, at least the two correction values of two calibration points (8, 9, 10, 11) are used, the tangential planes of which are most similar in their respective alignment of the tangential plane (12a) of the relevant measuring point.

13. Method according to any one of the preceding claims, **characterised in that** a measuring point (12) on the workpiece piece (4) with a tangential plane (12a) which is aligned to be almost the same as the tangential plane of the calibrating point (8, 9, 10 or 11) is reached by the measuring probe (2) with the same start vector and the same start speed as the corresponding calibrating point.

14. Method according to any one of the preceding claims, **characterised in that** for a measuring point (12) on the workpiece (4) for which no calibrating point is defined with a tangential plane which has at least almost the same alignment, the start vector and /or the start speed of the measuring probe (2) is determined by interpolation.

15. Device for the spatial measurement of workpieces (4) on a machine tool, comprising a measuring probe (2) and a computer unit (15), wherein in relation to a workpiece the measuring probe (2) can be moved in an XYZ coordinate system, and the computer unit (15) is set up to determine a correction value (K) respectively on a calibrating body (1) for predefined, distributed calibrating points (8, 9, 10, 11), **characterised in that** the computer unit (15) is also set up to determine for a measuring point (12) a correction value (Kw) of an additional calibrating point (13) on the calibrating body (1), if there is no correction value available for the measuring point and, taking into account at least one known correction value (K), a possible, maximum measurement error (X) can be greater than a maximum, permissible measurement error (T).

16. Device according to claim 15 which is set up to perform the method according to any one of claims 2 to 14.

## Revendications

1. Procédé de mesure tridimensionnelle de pièces à usiner (4) à l'aide d'un palpeur (2) sur une machine-outil, dans laquelle on réalise la mobilité du palpeur dans un système de coordonnées XYZ,
procédé selon lequel un organe de calibrage (1) ayant des points de calibrage (8, 9, 10, 11) répartis, prédéfinis, donnant pour chacun une valeur de correction (K),
procédé **caractérisé en ce que**
pour un point de mesure (12), on détermine une valeur de correction (Kw) d'un autre point de calibrage (13) de l'organe de calibrage (1) si pour le point de mesure, on ne dispose d'aucune valeur de correction et si l'erreur de mesure maximale possible (X) en tenant compte d'au moins une valeur de correction (K), connue, risque d'être supérieure à l'erreur de mesure (T), maximale acceptée.

2. Procédé selon la revendication 1,
**caractérisé en ce que**
la position de l'autre point de calibrage (13) sur l'organe de calibrage (1) est définie pour que son plan tangent (13a) soit au moins sensiblement parallèle au plan tangent (12a) au point de mesure (12).

3. Procédé selon la revendication 1,
**caractérisé en ce que**
la position de l'autre point de calibrage (13) est définie en fonction d'une prescription d'augmentation de la finesse d'une trame prédéfinie par les points de calibrage (8, 9, 10, 11) répartis sur l'organe de calibrage (1).

4. Procédé selon l'une des revendications précédentes,
**caractérisé en ce qu'**
on ajoute la valeur de correction (Kw) de l'autre point de calibrage (13) déterminé de l'ensemble des valeurs de correction (K) aux points de calibrage prédéfinis (8, 9, 10, 11) et elle est prise en compte pour déterminer la valeur de correction pour les mesures suivantes sur la pièce.

5. Procédé selon l'une des revendications précédentes,
**caractérisé en ce qu'**
au début du procédé, les positions des points de calibrage (8, 9, 10, 11) sont prévues selon un calibrage de base de façon que la trame obtenue couvre sensiblement ou régulièrement l'organe de calibrage (1).

6. Procédé selon l'une des revendications précédentes,
**caractérisé en ce que**
la position des points de calibrage (8, 9, 10, 11) pour un calibrage de base dépend de la topographie de la pièce de façon que la trame obtenue sur l'organe de calibrage (1) ne coïncide qu'aux endroits où les plans tangents (8a-11a) sont alignés au moins sensiblement comme les plans tangents (5a-7a) des points de mesure d'une pièce à mesurer.

7. Procédé selon l'une des revendications précédentes,
**caractérisé en ce que**
pour déterminer la position des points de calibrage (8, 9, 10, 11) fixés pour le calibrage de base, on tient compte des conditions de précision auxquelles les différents points de mesure (8, 9, 10, 11) doivent répondre pour mesurer la pièce à usiner (4).

8. Procédé selon l'une des revendications précédentes,
**caractérisé en ce qu'**
on détermine une valeur de correction (K) associée à chaque point de calibrage (8, 9, 10, 11) en approchant le palpeur de mesure (2) du point de calibrage (8, 9, 10, 11) respectif.

9. Procédé selon l'une des revendications précédentes,
**caractérisé en ce qu'**
on détermine la valeur de correction (K) d'un point de calibrage (8, 9, 10, 11) par un vecteur d'approche prédéfini et/ou une vitesse d'approche prédéfinie,

10. Procédé selon l'une des revendications précédentes,
**caractérisé en ce que**
pour le point de mesure (12), on détermine une valeur de correction (Ki) d'un autre point de calibrage (13) en la déduisant d'une valeur de correction connue si l'erreur de mesure maximale (X) possible en tenant compte des valeurs de correction connues (K) est égale ou inférieure à une erreur de mesure maximale autorisée (T).

11. Procédé selon l'une des revendications précédentes,
**caractérisé en ce que**
pour déterminer la valeur de correction (Ki) d'un point de mesure (12) pour lequel on ne dispose pas de point de calibrage, on utilise la valeur de correction (K) du point de calibrage (8, 9, 10, 11) dont le plan tangent a son orientation la plus proche de celle du plan tangent du point de mesure concerné.

12. Procédé selon l'une des revendications précédentes,
**caractérisé en ce que**
pour déterminer la valeur de correction (Ki) d'un point de mesure (12) pour lequel on ne dispose pas de point de calibrage, on utilise au moins les deux valeurs de correction de chaque fois deux points de calibrage (8, 9, 10, 11) dont les plans tangents ont leur orientation la plus proche de celle du plan tangent (12a) du point de mesure concerné.

13. Procédé selon l'une des revendications précédentes,
**caractérisé en ce qu'**
un point de mesure (12) de la pièce à usiner (4) ayant un plan tangent (12a) qui est au moins sensiblement orienté comme le plan tangent du point de calibrage (8, 9, 10 ou 11) est approché par le palpeur (2) avec le même vecteur d'approche et la même vitesse d'approche que le point de calibrage correspondant.

14. Procédé selon l'une des revendications précédentes,
**caractérisé en ce que**
pour un point de mesure (12) de la pièce (4) pour lequel on n'a pas de point de calibrage avec un plan tangent orienté au moins sensiblement de façon analogue, on détermine le vecteur d'approche et/ou la vitesse d'approche du palpeur (2) en procédant par interpolation.

15. Dispositif de mesure tridimensionnelle de pièces à usiner (4) sur une machine-outil avec un palpeur (2) et une unité de calcul (15),
- et en référence à une pièce, on réalise la mobilité du palpeur de mesure (2) dans un système de coordonnées XYZ et l'unité de calcul (15) est conçue pour déterminer sur un organe de calibrage (1) une valeur de correction (K) respective pour des points de calibrage (8, 9, 10, 11) répartis de façon prédéfinie,
dispositif **caractérisé en ce que** l'unité de calcul (15) est en outre conçue pour déterminer, pour un point de mesure (12), une valeur de correction (Kw) d'un autre point de calibrage (13) de l'organe de calibrage (1) si, pour le point de mesure, on ne dispose d'aucune valeur de correction et si l'erreur de mesure (X) en tenant compte d'au moins une valeur de correction connue (K), possible, maximale, risque d'être supérieure à l'erreur de mesure maximale autorisée (T).

16. Dispositif selon la revendication 15, conçue pour appliquer le procédé selon l'une quelconque des revendications 2 à 14.
